# EUROPÄISCHE PATENTSCHRIFT

(11) **EP 3 755 160 B1**
(45) Veröffentlichungstag und Bekanntmachung des Hinweises auf die Patenterteilung: **03.11.2021**
(21) Anmeldenummer: 18722379.7
(22) Anmeldetag: 20.04.2018
(51) Int. Cl.: A23G 9/04, A23G 9/22, F25C 5/04

(54) **VORRICHTUNG ZUM ZERKLEINERN VON IN BLOCKFORM BEREITGESTELLTEN TIEFGEFRORENEN LEBENSMITTELN**
DEVICE FOR CRUSHING DEEP-FROZEN FOODSTUFFS PROVIDED IN BLOCK FORM
DISPOSITIF POUR BROYER DES DENRÉES ALIMENTAIRES SURGELÉES SE PRÉSENTANT SOUS LA FORME D'UN BLOC

(43) Veröffentlichungstag der Anmeldung: 30.12.2020
(73) Patentinhaber: Pacotrade AG, 6300 Zug (CH)
(72) Erfinder: KISER, Peter, 4618 Boningen (DE); FÄH, Stefan, Lukas, 4612 Wangen b. Olten (CH)
(74) Vertreter: Münch, Martin Walter
(86) Internationale Anmeldenummer: PCT/CH2018/000017
(87) Internationale Veröffentlichungsnummer: WO 2019/200491

(56) Entgegenhaltungen:
- EP-A2- 0 062 805
- WO-A1-97/36498
- ES-U- 1 071 424

## Beschreibung

### Technisches Gebiet

Die Erfindung betrifft eine Vorrichtung zum Zerkleinern, insbesondere Pürieren oder Pacossieren, von in Blockform bereitgestellten tiefgefrorenen Lebensmitteln gemäss dem Oberbegriff von Patentanspruch 1.

### Stand der Technik

Gattungsgemässe Vorrichtungen zum Zerkleinern von in Blockform bereitgestellten tiefgefrorenen Lebensmitteln dienen der Erzeugung von creme- oder schaumartigen Lebensmittelzubereitungen, wie z.B. Moussen, Farcen, Geschmackskonzentraten, Pasten, Saucen, Suppen, Eis oder Sorbets, und sind heute aus der Profi-Gastronomie nicht mehr wegzudenken.

Die Anfänge derartiger Vorrichtungen gehen zurück auf den Schweizer Ingenieur Wilhelm Maurer, welcher in den 1980er Jahren auf der Suche nach der ultimativen Eiscreme-Maschine einen neuen Verarbeitungsprozess für tiefgefrorene Lebensmittel erfand, bei dem mittels eines rotierenden Messers von einem Block aus auf -22 °C tiefgefrorenen Lebensmitteln feinste Schichten abgeschabt werden, ohne dass ein Auftauen des abgeschabten Materials erfolgt. Dieser Prozess wird heute in Anlehnung an das zu seiner Ausführung speziell entwickelte Gerät "Pacojet" der Schweizer Firma Pacojet AG, Zug, auch als "Pacossieren" bezeichnet wird.

Damit in kurzer Zeit verschiedene Produkte verarbeitet werden können, ohne dass zwischen jedem Produktewechsel eine aufwendige Reinigung der mit den Produkten in Kontakt kommenden Teile erforderlich ist, werden die tiefgefrorenen Lebensmittel bei derartigen Geräten in austauschbaren Gefässen bereitgestellt und mittels Messern, welche einfach und ohne den Einsatz von Werkzeugen ausgetauscht werden können, darin zerkleinert.

EP 0 062 805 A2 zeigt die ursprüngliche Ausführung der von Wilhelm Maurer entwickelten Softeis-Maschine, bei welcher von einer blockförmig gefrorene Eis-Ausgangsmasse mittels eines rotierenden Messers feine Schichten abgeschabt, geschlagen und mit unter Überdruck stehender Luft vermischt werden. Das Messer ist über eine bajonett-ähnliche Verbindung mit der dieses tragenden und antreibenden Messerwelle verbunden.

Aus ES 1 071 424 U ist eine Vorrichtung zur Erzeugung eines creme- oder schaumartigen Lebensmittels aus einem in Blockform vorliegenden Lebensmittel-Ausgangsmaterial bekannt, mit welcher mittels eines rotierenden Messers Schichten von dem Lebensmittelblock abgeschabt werden. Auch hier ist das Messer über eine bajonett-ähnliche Verbindung mit der dieses tragenden und antreibenden Messerwelle verbunden.

WO 97/36498 A1 zeigt ein Gerät zur Herstellung von Lebensmitteln in mousseartiger Konsistenz, welches einen ähnlichen Aufbau aufweist wie die Softeis-Maschine aus EP 0 062 805. Bei diesem Gerät ist das Messer über eine Schrägverzahnung mit der Messerwelle verbunden und wird mittels eines in der Messerwelle angeordneten Permanentmagnetens kraftschlüssig am Wellenende gehalten.

Die beiden erstgenannten Geräte weisen den Nachteil auf, dass ein automatisches An- und Abkoppeln des Messers an die bzw. von der Messerwelle praktisch nicht möglich ist, so dass das Messer nicht zusammen mit dem den Lebensmittelblock beinhaltenden Gefäss bereitgestellt werden kann, wie dies z.B. in WO 97/36498 A1 beschrieben ist, sondern zuerst von Hand an der Messerwelle befestigt und später wieder von Hand demontiert werden muss. Abgesehen davon, dass dies zeitaufwendig und hygienisch suboptimal ist, ergibt sich auch der Nachteil, dass ein nicht unerhebliches Verletzungspotential besteht, was spezielle Sicherheitseinrichtungen am Gerät erforderlich macht.

Das in WO 97/36498 A1 gezeigte Gerät vermeidet die zuvor erwähnten Nachteile. Problematisch ist hier jedoch, dass es unter bestimmten Umständen beim automatischen Ankopplungsbetrieb passieren kann, dass die Messerwelle das Messer in das Gefäss hineindrückt anstatt dieses an ihr Ende anzukoppeln, mit dem Resultat, dass sich das Messer in einer undefinierten Position im Gefäss befindet und es beim weiteren Einfahren der Messerwelle zu einem Crash zwischen Messer und Messerwelle kommen kann.

Bei allen zuvor erwähnten Geräten besteht zudem die Gefahr, dass es unter bestimmten Bedingungen, z.B. bei einem abrupten Drehzahl- oder Lastwechsel, zu einem unbemerkten Abkoppeln des Messers von der Messerwelle kommen kann, mit dem zuvor erwähnten Resultat.

Ebenfalls sind aus dem Stand der Technik Geräte bekannt, bei denen das Messer über eine Verbindung an der Messerwelle befestigt ist, zu deren Aufhebung es der manuellen Betätigung eines Entriegelungsorgans bedarf. Derartige Geräte weisen jedoch, wie schon die beiden erstgenannten Geräte, den Nachteil auf, dass ein automatisches An- und Abkoppeln des Messers an die Messerwelle nicht möglich ist, mit den bereits zuvor erwähnten Konsequenzen.

### Darstellung der Erfindung

Es stellt sich daher die Aufgabe, technische Lösungen zur Verfügung zu stellen, welche die zuvor genannten Nachteile des Standes der Technik nicht aufweisen oder diese zumindest teilweise vermeiden.

Diese Aufgabe wird durch den Gegenstand von Patentanspruch 1 gelöst.

Dieser betrifft eine Vorrichtung zum Zerkleinern, wie z.B. Pürieren oder Pacossieren, von in Blockform bereitgestellten tiefgefrorenen Lebensmitteln. Die Vorrichtung umfasst ein ein- oder mehrschneidiges Werkzeug zum Zerkleinern zumindest eines Teils des tiefgefrorenen Lebensmittelblocks. Hierzu wird im bestimmungsmässen Betrieb der Vorrichtung das Werkzeug um eine bevorzugterweise vertikale Rotationsachse herum rotiert und dabei entlang der Rotationsachse in Richtung auf den Lebensmittelblock zu vorgeschoben, so dass es unter einem Abschaben von Lebensmittelschichten von dem Lebensmittelblock in diesen eindringt. Das Werkzeug wird dabei bevorzugterweise mit einer Drehzahl zwischen 1000 U/min und 3000 U/min rotiert, die Vorschubgeschwindigkeit beträgt dabei bevorzugterweise zwischen 0.5 mm und 5 mm pro Sekunde.

Das Werkzeug ist derart an einem Ende einer dieses tragenden und antreibenden Welle befestigt, dass es werkzeuglos vom Wellenende entfernt werden kann und auch werkzeuglos wieder bestimmungsgemäss am Wellenende befestigt werden kann. Die Befestigung des Werkzeugs ist derartig ausgebildet, dass das bestimmungsgemäss am Wellenende befestigte Werkzeug axial am Wellenende anschlägt, dabei kraftschlüssig am Wellenende gehalten ist und in bestimmungsgemässer Antriebsdrehrichtung einen rotatorischen Formschluss mit dem Wellenende bildet, zur Übertragung von Antriebskräften von der Welle auf das Werkzeug.

Weiter umfasst die Vorrichtung eine Werkzeug-Detektionseinrichtung, mit welcher festgestellt werden kann, ob ein Werkzeug bestimmungsgemäss am Wellenende angeordnet ist oder nicht.

Mit derartigen erfindungsgemässen Vorrichtungen kann ein automatisches An- und Abkoppeln des Messers an die bzw. von der Messerwelle realisiert werden, so dass das Messer zusammen mit dem den Lebensmittelblock beinhaltenden Gefäss bereitgestellt werden kann, und es kann gleichzeitig sichergestellt werden, dass ein Betrieb nur bei bestimmungsgemäss angekoppeltem Werkzeug erfolgt bzw. möglich ist. Entsprechend ergibt sich eine schnelle, hygienische und zugleich äusserst sichere Bedienung.

Mit Vorteil ist das bestimmungsgemäss am Wellenende befestigte Werkzeug reibschlüssig, mittels einer Rastverbindung, welche unter Überwindung einer bestimmten Kraft lösbar ist, oder mittels Magnetkraft am Wellenende gehalten. Derartige Befestigungslösungen benötigen keine Betätigungsmechanismen zur Erzeugung und/oder Aufhebung der Verbindung zwischen Messer und Welle und eignen sich insbesondere im Falle der magnetischen Variante besonders gut für eine einfache und aus hygienischer Sicht vorteilhafte Befestigung des Werkzeugs am Wellenende, da die Befestigungselemente spaltfrei ausgebildet werden können und auch keine möglicherweise Abrieb erzeugende intensive Reibung zwischen diesen erforderlich ist.

Für den Fall, dass das Werkzeug mittels Magnetkraft am Wellenende gehalten ist, ist es bevorzugt, dass dieses aus einem ferromagnetischen Material ist und die Welle an ihrem Wellenende einen bevorzugterweise zentralen Magneten aufweist, mit welchem das Werkzeug am Wellenende gehalten wird. Hierdurch lassen sich bei derartigen Lösungen die Werkzeuge besonders kostengünstig zu Verfügung stellen.

Ist dabei der Magnet bei bestimmungsgemäss am Wellenende befestigtem Werkzeug zumindest teilweise innerhalb des Werkzeugs angeordnet, so werden besonders einfache und mechanisch stabile Lösungen möglich, bei denen der Magnet am Wellenende angeordnet ist und dieses Ende vom Werkzeug umgriffen wird.

In einer weiteren, alternativen oder ergänzenden bevorzugten Ausführungsform der Vorrichtung ist das Werkzeug magnetisch und/oder weist das Werkzeug einen Magneten auf. Diese magnetische Ausgestaltung bzw. dieser Magnet kann der Detektion dienen, ob das Werkzeug bestimmungsgemäss am Wellenende angeordnet ist oder nicht, und/oder kann dazu dienen, das Werkzeug am Wellenende zu halten, und zwar allein durch dessen Magnetkraft oder in Kombination mit einer zusätzlichen, am Ende der Welle bereitgestellten Magnetkraft.

Im letztgenannten Fall ist das Werkzeug zumindest im Bereich seiner Befestigung am Wellenende magnetisch und/oder weist in diesem Bereich einen Magneten auf. Wie bereits erwähnt wurde, kann diese magnetische Ausbildung bzw. dieser Magnet allein oder in Kombination mit einem zusätzlichen Magneten am Wellenende das Werkzeug kraftschlüssig am Wellenende halten.

Ist dabei der Magnet bei bestimmungsgemäss am Wellenende befestigtem Werkzeug zumindest teilweise innerhalb des Wellenendes angeordnet, so werden besonders einfache und mechanisch stabile Lösungen möglich, bei denen der Magnet am wellenseitigen Ende des Werkzeugs angeordnet ist und dieses Werkzeugende von der Welle umgriffen wird.

Bevorzugterweise ist bei diesen Ausführungsformen, bei denen das Werkzeug mittels Magnetkraft am Wellenende gehalten wird, das Wellende aus einem nichtferromagnetischen Material.

Auch ist es bei den Ausführungsformen der Vorrichtung, bei denen das Werkzeug mittels Magnetkraft am Wellenende gehalten wird, bevorzugt, dass die Werkzeug-Detektionseinrichtung einen Hallsensor mit zugeordneter Auswerteelektronik umfasst, mittels welcher, zumindest in einer bestimmten Axialposition der Welle, unterschiedliche charakteristische Magnetfeldstärken bei bestimmungsgemäss am Wellenende befestigtem Werkzeug und bei nicht bzw. nicht bestimmungsgemäss am Wellenende befestigtem Werkzeug unterschieden werden können, zum Feststellen, ob ein Werkzeug bestimmungsgemäss am Wellenende angeordnet ist oder nicht. Auf diese Weise kann durch entsprechende Bedienung oder Sicherheitseinrichtungen der Vorrichtung sichergestellt werden, dass ein Betrieb nur bei bestimmungsgemäss angekoppeltem Werkzeug erfolgt oder möglich ist.

Dabei ist die Vorrichtung bevorzugterweise derartig ausgebildet, dass zumindest in einer axialen Position der Welle, in welcher das bestimmungsgemäss am Wellenende befestigte Werkzeug eine maximale Distanz zu dem zu zerkleinernden gefrorenen Lebensmittelblock aufweist, also typischerweise in der Startposition direkt nach dem Ankoppeln des Werkzeugs, unterschiedliche charakteristische Magnetfeldstärken bei bestimmungsgemäss am Wellenende befestigtem Werkzeug und bei nicht bzw. nicht bestimmungsgemäss am Wellenende befestigtem Werkzeug unterschieden werden können. Hierdurch ergibt sich der Vorteil, dass bereits vor der eigentlichen Inbetriebnahme der Vorrichtung festgestellt werden kann, ob ein Werkzeug bestimmungsgemäss am Wellenende angeordnet ist oder nicht.

Mit Vorteil ist der Hallsensor an einem ortsfesten Bauteil der Vorrichtung angeordnet. Hierdurch entfallen allfällige Signalübertragungseinrichtungen von rotierenden auf stehende Bauteile.

In einer ersten bevorzugten Variante ist der Hallsensor dabei in einem Bereich nahe der Welle angeordnet, bevorzugterweise in einem Bereich, welcher bei vollständig zurückgezogener Welle nahe dem Ende der Welle ist, welches bestimmungsgemäss das Werkzeug trägt. Bei dieser Variante ist die Detektion der unterschiedlichen charakteristischen Magnetfeldstärken besonders einfach.

In einer zweiten bevorzugten Variante ist der Hallsensor in einem Bereich entfernt von der Welle angeordnet. Dabei ist zwischen dem Hallsensor und der Welle, bevorzugterweise zwischen dem Hallsensor und einem Bereich, welcher bei vollständig zurückgezogener Welle nahe dem Ende der Welle ist welches bestimmungsgemäss das Werkzeug trägt, ein Ferritstab angeordnet. Diese Variante eröffnet relativ grosse Freiheiten für die Platzierung des Hallsensors innerhalb der Vorrichtung.

Dabei ist es mit Blick auf eine gute Unterscheidbarkeit der charakteristischen Magnetfeldstärken bevorzugt, dass zwischen dem Ferritstab und dem das Werkzeug tragenden Ende der Welle im Wesentlichen keine ferromagnetischen Bauteile angeordnet sind.

In noch einer weiteren bevorzugten Ausführungsform umfasst die Vorrichtung eine Steuerung, welche einen bestimmungsgemässen Betrieb der Vorrichtung nur zulässt, solange die Werkzeug-Detektionseinrichtung feststellt, dass ein Werkzeug bestimmungsgemäss am Wellenende angeordnet ist oder nur dann zulässt, wenn die Werkzeug-Detektionseinrichtung zumindest in einer bestimmten Position der Welle festgestellt hat, dass ein Werkzeug bestimmungsgemäss am Wellenende angeordnet ist.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 eine teilweise geschnittene, perspektivische Darstellung der mechanischen Hauptkomponenten einer erfindungsgemässen Vorrichtung; und
Fig. 2 eine Schnittdarstellung durch den Bereich der Vorrichtung aus Fig. 1, in welchem das untere Ende der Messerwelle gelagert ist.

### Wege zur Ausführung der Erfindung

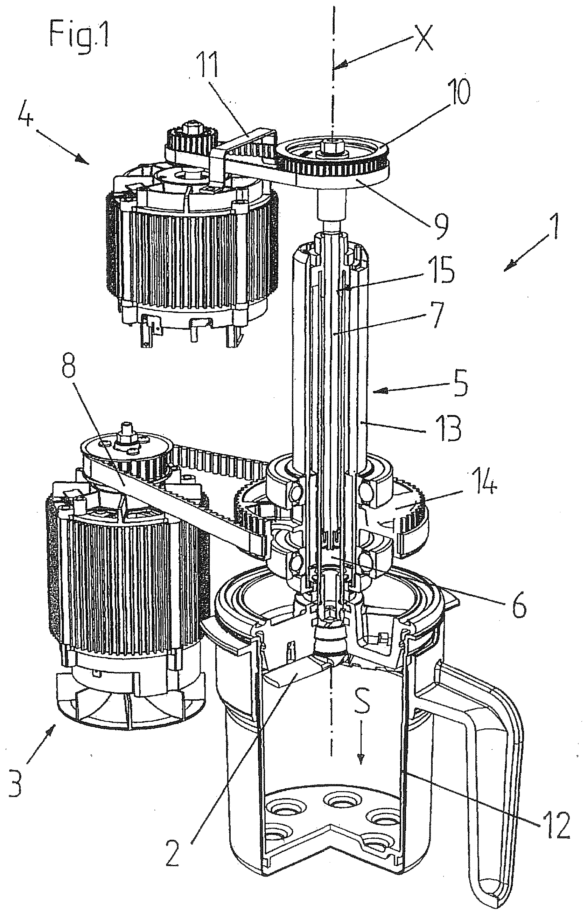

Fig. 1 zeigt eine teilweise geschnittene, perspektivische Darstellung der mechanischen Hauptkomponenten 1 einer erfindungsgemässen Vorrichtung, zusammen mit einem in bestimmungsgemässer Position daran angeordneten Gefäss 12, mit welchem im bestimmungsgemässen Betrieb die tiefgefrorenen Lebensmittel als ein in dem Gefäss 12 eingefrorener. Lebensmittelblock bereitgestellt werden und in welchem im bestimmungsgemässen Betrieb das Zerkleinern, insbesondere Pürieren oder Pacossieren, zumindest eines Teils des tiefgefrorenen Lebensmittelblocks erfolgt.

Bei dieser Vorrichtung erfolgt das Zerkleinern der in Blockform bereitgestellten tiefgefrorenen Lebensmitteln (nicht dargestellt) dadurch, dass das mehrflügelige Messer 2 (anspruchsgemässes Werkzeug) um eine vertikale Rotationsachse X herum rotiert wird und dabei entlang dieser Rotationsachse X in Richtung S auf den Lebensmittelblock zu vorgeschoben wird, wobei es feine Schichten von dem gefrorenen Lebensmittelblock abschabt.

Wie zu erkennen ist, weist die Vorrichtung für die Erzeugung der Rotationsbewegung und der Vorschubbewegung des Messers 2 einen ersten elektrischen Antriebsmotor 3 und einen zweiten elektrischen Antriebsmotor 4 auf. Beide Motoren 3, 4 sind separat ansteuerbar, drehzahlvariabel und an einer feststehenden Tragstruktur der Vorrichtung (nicht gezeigt) befestigt. Weiter umfasst die Vorrichtung eine Getriebeanordnung 5, welche mit den beiden Antriebsmotoren 3, 4 gekoppelt ist und derartig ausgebildet ist, dass lediglich der erste Antriebsmotor 3 dem Rotationsantrieb des Messers 2 dient und dass beide Antriebsmotoren 3, 4 gemeinsam dem Messervorschub dienen.

Hierzu weist die Getriebeanordnung 5 eine das Messer 2 tragende rotierbare Hohlwelle 6 auf, welche axial verschiebbar gelagert ist.

Diese Hohlwelle 6 ist konzentrisch und axial verschieblich in einer axial feststehend rotierbar gelagerten längsverzahnten Antriebshülse 13 angeordnet, mit deren Längsverzahnung sie einen rotatorischen Formschluss bildet, so dass die Hohlwelle 6 über die Antriebshülse 13 mit dem ersten Antriebsmotor 3 um die Rotationsachse X herum rotierbar ist. Hierzu weist die Antriebshülse 13 an ihrem Aussenumfang ein Riemenrad 14 auf, welches über einen Zahnriemen 8 mit dem ersten Antriebsmotor 3 angetrieben werden kann.

Konzentrisch in der Hohlwelle 6 angeordnet ist eine axial feststehend gelagerte Gewindespindel 7, welche mit dem zweiten Antriebsmotor 4 um die Rotationsachse X herum rotierbar ist. Hierzu weist die Gewindespindel 7 an ihrem freien Ende ein Riemenrad 10 auf, welches über einen Zahnriemen 9 mit dem zweiten Antriebsmotor 4 angetrieben werden kann.

Die Hohlwelle 6 weist eine Innengewinde-Abschnitt 15 auf, welcher in das Aussengewinde der Gewindespindel 7 eingreift. Hierdurch sind die Hohlwelle 6 und die Gewindespindel 7 derartig miteinander gekoppelt, dass eine Verdrehung der Gewindespindel 7 relativ zu der Hohlwelle 6 eine axiale Verschiebung der Hohlwelle 6 gegenüber der axial feststehenden Gewindespindel 7 bewirkt. Mit anderen Worten gesagt bewirkt also eine Drehzahldifferenz zwischen der Hohlwelle 6 und der Gewindespindel 7 ein Absenken oder Anheben der Hohlwelle 6 entlang der Rotationsachse X und damit ein Vorschieben bzw. Zurückziehen des Messers 2 bezüglich des zu zerkleinernden Lebensmittelblocks. Bei identischen Drehzahlen von Hohlwelle 6 und Gewindespindel 7 wird das Messer 2 rotiert, ohne dass es dabei eine Axialbewegung entlang der Rotationsachse X ausführt.

Mit anderen Worten gesagt wird bei vorgegebenen identischen Drehrichtungen der beiden Antriebsmotoren 3, 4 und einem bestimmten Verhältnis der Drehzahlen der beiden Antriebsmotoren 3, 4, bei welchem die Drehzahlen der Hohlwelle 6 und der Gewindespindel 7 identisch sind, das Messer 2 rotiert, ohne dass dieses eine Axialbewegung entlang der Rotationsachse X vollführt. Bei einer Überschreitung bzw. Unterschreitung dieses bestimmten Drehzahlverhältnisses erfolgt zusätzlich eine Vorschub- bzw. Rückzugbewegung des Messers 2 entlang der Rotationsachse X, welche mit zunehmender Über- bzw. Unterschreitung des Drehzahlverhältnisses in der Geschwindigkeit zunehmend ist.

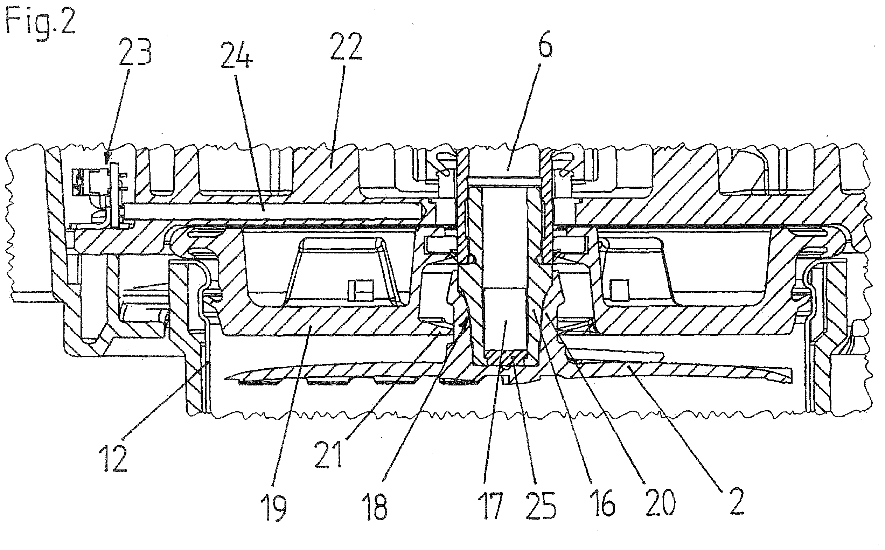

Wie aus Fig. 2 hervorgeht, welche eine Schnittdarstellung durch den Bereich der Vorrichtung aus Fig. 1 zeigt, in welchem das untere Ende der Messerwelle 6 gelagert ist, schlägt das bestimmungsgemäss am Wellenende 16 befestigte Werkzeug 2, welches aus einem ferromagnetischen Edelstahl ist, axial am Ende 16 der Welle 6 an und wird dabei von einem zentral in dem Wellenende 16 angeordneten Magneten 17 kraftschlüssig am Wellenende gehalten. Der Magnet 17, welcher auf seiner Stirnseite mit einem Edelstahlplättchen 25 abgedeckt ist, ist dabei vollständig innerhalb des Werkzeugs 2 angeordnet. Die Übertragung der Antriebskräfte von der Welle 6 auf das Werkzeug 2 erfolgt über eine Schrägverzahnung 18 zwischen dem Werkzeug 2 und dem Wellenende 16, welche einen rotatorischen Formschluss zwischen diesen erzeugt.

Wie zu erkennen ist, weist das Gefäss 12 einen Deckel 19 auf, welcher von der Messerwelle 6 durchdrungen wird und welcher, vor dem Ankoppeln der Welle 6 an das Messer 2 durch Einfahren des Endes 16 der Welle 6 in die Nabe 20 des Werkzeugs 2, das Werkzeug 2 mit Haltenasen 21 an der Unterseite des Deckels 19 hält.

Wie weiter zu erkennen ist, dichtet der Deckel 19 das Gefäss 12 gegen eine unterseitige Gehäusewand 22 der Vorrichtung ab, welche von einem Aluminium-Spritzgussteil oder einem Kunststoff-Spritzgussteil gebildet wird.

In einem Bereich entfernt von der Welle 6 bzw. dem Wellenende 16 ist ein Hallsensor 23 mit zugeordneter Auswerteelektronik angeordnet, welcher Magnetfelder erfasst. Angeordnet zwischen dem Hallsensor 23 und einem Bereich, welcher bei der dargestellten Situation mit vollständig zurückgezogener Welle nahe dem Ende 16 der Welle 6 ist, welches bestimmungsgemäss das Werkzeug 2 trägt, ist ein Ferritstab 24 angeordnet, welcher Magnetfelder von diesem Bereich zu dem Hallsensor 23 leitet. Je nachdem, ob ein Werkzeug 2 bestimmungsgemäss am Wellenende 16 befestigt ist oder nicht, weist das von dem Magneten 17 ausgehende und über den Ferritstab 24 an den Hallsensor 23 übermittelte Magnetfeld eine unterschiedliche Charakteristik auf.

Der Magnet 17, der Ferritstab 24 und der Hallsensor 23 sind Teil einer anspruchsgemässen Werkzeug-Detektionseinrichtung der erfindungsgemässen Vorrichtung, mittels welcher in der dargestellten Axialposition der Welle 6 unterschiedliche charakteristische Magnetfeldstärken bei bestimmungsgemäss am Wellenende 16 befestigtem Werkzeug 2 und bei nicht bzw. nicht bestimmungsgemäss am Wellenende 16 befestigtem Werkzeug 2 unterschieden werden können, zum Feststellen, ob das Werkzeug 2 bestimmungsgemäss am Wellenende 16 angeordnet ist oder nicht.

Stellt die Werkzeug-Detektionseinrichtung in der dargestellten Axialposition der Welle 6 fest, dass kein Werkzeug 2 am Wellenende 16 befestigt ist oder zumindest kein bestimmungsgemäss befestigtes Werkzeug 2 vorhanden ist, so blockiert sie den weiteren bestimmungsgemässen Betrieb der Vorrichtung.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Vorrichtung zum Zerkleinern, insbesondere Pürieren oder Pacossieren, von in Blockform bereitgestellten tiefgefrorenen Lebensmitteln,
mit einem Werkzeug (2) zum Zerkleinern zumindest eines Teils des tiefgefrorenen Lebensmittelblocks, welches an einem Ende (16) einer rotierbaren Welle (6) befestigt ist, mit welcher es im bestimmungsgemässen Betrieb um eine insbesondere vertikale Rotationsachse (X) herum rotiert wird und dabei entlang der Rotationsachse (X) in Richtung (S) auf den Lebensmittelblock zu vorgeschoben wird, unter einem Abschaben von Lebensmittelschichten von dem Lebensmittelblock,
wobei die Befestigung des Werkzeugs (2) am Wellenende (16) derartig ausgebildet ist,
dass das Werkzeug (2) werkzeuglos vom Wellenende (16) entfernbar und wieder bestimmungsgemäss am Wellenende (16) befestigbar ist,
dass das bestimmungsgemäss am Wellenende (16) befestigte Werkzeug (2) axial am Wellenende (16) anschlägt und dabei kraftschlüssig am Wellenende (16) gehalten ist,
dass das bestimmungsgemäss am Wellenende (16) befestigte Werkzeug (2) in bestimmungsgemässer Antriebsdrehrichtung einen rotatorischen Formschluss mit dem Wellenende (16) bildet, zur Übertragung von Antriebskräften von der Welle (6) auf das Werkzeug (2),
und wobei die Vorrichtung eine Werkzeug-Detektionseinrichtung (17, 23, 24) aufweist, mit welcher feststellbar ist, ob ein Werkzeug (2) bestimmungsgemäss am Wellenende (16) angeordnet ist oder nicht.

2. Vorrichtung nach Anspruch 1, wobei die Befestigung des Werkzeugs am Wellenende derartig ausgebildet ist, dass das bestimmungsgemäss am Wellenende befestigte Werkzeug reibschlüssig oder mittels einer Rastverbindung, welche unter Überwindung einer bestimmten Kraft lösbar ist, am Wellenende gehalten ist.

3. Vorrichtung nach Anspruch 1, wobei die Befestigung des Werkzeugs (2) am Wellenende (16) derartig ausgebildet ist, dass das bestimmungsgemäss am Wellenende (16) befestigte Werkzeug (2) mittels Magnetkraft am Wellenende (16) gehalten ist.

4. Vorrichtung nach Anspruch 3, wobei das Werkzeug (2) aus einem ferromagnetischen Material ist und die Welle (6) an ihrem Wellenende (16) einen insbesondere zentralen Magneten (17) aufweist, mit welchem das Werkzeug (2) am Wellenende (16) gehalten ist.

5. Vorrichtung nach Anspruch 4, wobei der Magnet (17) bei bestimmungsgemäss am Wellenende (16) befestigtem Werkzeug (2) zumindest teilweise innerhalb des Werkzeugs (2) angeordnet ist.

6. Vorrichtung nach einem der vorangehenden Ansprüche, wobei das Werkzeug magnetisch ist und/oder einen Magneten aufweist.

7. Vorrichtung nach Anspruch 6, wobei das Werkzeug im Bereich seiner Befestigung am Wellenende magnetisch ist und/oder einen Magneten aufweist, und darüber am Wellenende gehalten ist.

8. Vorrichtung nach einem der Ansprüche 6 bis 7, wobei der Magnet bei bestimmungsgemäss am Wellenende befestigtem Werkzeug zumindest teilweise innerhalb des Wellenendes angeordnet ist.

9. Vorrichtung nach einem der Ansprüche 3 bis 8, wobei das Wellende (16) aus einem nicht-ferromagnetischen Material ist.

10. Vorrichtung nach einem der Ansprüche 3 bis 9, wobei die Werkzeug-Detektionseinrichtung (17, 23, 24) einen Hallsensor (23) mit zugeordneter Auswerteelektronik umfasst, mittels welchen, zumindest in einer bestimmten Axialposition der Welle (6), unterschiedliche charakteristische Magnetfeldstärken bei bestimmungsgemäss am Wellenende (16) befestigtem Werkzeug (2) und bei nicht am Wellenende (16) befestigtem Werkzeug (2) unterschieden werden können, zum Feststellen, ob ein Werkzeug (2) bestimmungsgemäss am Wellenende (16) angeordnet ist oder nicht.

11. Vorrichtung nach Anspruch 10, wobei zumindest in einer axialen Position der Welle (6), in welcher das bestimmungsgemäss am Wellenende (16) befestigte Werkzeug (2) eine maximale Distanz zu dem zu zerkleinernden gefrorenen Lebensmittelblock aufweist, unterschiedliche charakteristische Magnetfeldstärken bei bestimmungsgemäss am Wellenende (16) befestigtem Werkzeug (2) und bei nicht am Wellenende (16) befestigtem Werkzeug (2) unterschieden werden können, zum Feststellen, ob ein Werkzeug (2) bestimmungsgemäss am Wellenende (16) angeordnet ist oder nicht.

12. Vorrichtung nach einem der Ansprüche 10 bis 11, wobei der Hallsensor (17) an einem ortsfesten Bauteil (22) der Vorrichtung angeordnet ist.

13. Vorrichtung nach Anspruch 12, wobei der Hallsensor in einem Bereich nahe der Welle angeordnet ist, insbesondere in einem Bereich, welcher bei vollständig zurückgezogener Welle nahe dem Ende der Welle ist, welches bestimmungsgemäss das Werkzeug trägt.

14. Vorrichtung nach Anspruch 12, wobei der Hallsensor (17) in einem Bereich entfernt von der Welle (6) angeordnet ist, und wobei zwischen dem Hallsensor (17) und der Welle (6), insbesondere zwischen dem Hallsensor (17) und einem Bereich, welcher bei vollständig zurückgezogener Welle (6) nahe dem Ende (16) der Welle (6) ist, welches bestimmungsgemäss das Werkzeug (2) trägt, ein Ferritstab (24) angeordnet ist.

15. Vorrichtung nach Anspruch 14, wobei zwischen dem Ferritstab (24) und dem das Werkzeug (2) tragenden Ende (16) der Welle (6) im Wesentlichen keine ferromagnetischen Bauteile angeordnet sind.

16. Vorrichtung nach einem der vorangehenden Ansprüche, wobei die Vorrichtung eine Steuerung umfasst, welche einen bestimmungsgemässen Betrieb der Vorrichtung nur dann zulässt, wenn die Werkzeug-Detektionseinrichtung (17, 23, 24) feststellt bzw. festgestellt hat, dass ein Werkzeug (2) bestimmungsgemäss am Wellenende (16) angeordnet ist.

## Claims

1. A device for shredding, in particular pureeing or pacotizing, of deep-frozen food products provided in block form
with a tool (2) for shredding at least a part of the deep-frozen food products block, which tool is coupled to one end (16) of a rotatable shaft (6), by means of which it is during intended operation rotated about a particularly vertical axis of rotation (X) and by means of which it is thereby advanced along the axis of rotation (X) in a direction (S) towards the food products block, thereby scraping off layers of food from the food products block,
wherein the coupling of the tool (2) on the end of the shaft (16) is designed in such a way,
that the tool (2) can be removed from the end of the shaft (16) without tools and can be recoupled to the end of the shaft (16) as intended,
that the tool (2) which is coupled to the end of the shaft (16) as intended abuts axially against the end of the shaft (16) and is thereby held in a forcelocking manner on the end of the shaft (16),
that the tool (2) which is coupled to the end of the shaft (16) as intended forms a rotational form-lock in its intended direction of drive rotation with the end of the shaft (16) for transmitting drive forces from the shaft (6) to the tool (2),
and wherein the device comprises a tool detection device (17, 23, 24) by means of which it can be determined whether a tool (2) is arranged at the end of the shaft (16) as intended or not.

2. Device according to claim 1, wherein the coupling of the tool at the end of the shaft is designed in such a way that the tool which is coupled to the end of the shaft as intended, is held at the end of the shaft by frictional engagement or by means of a snap-in connection which can be released by overcoming a certain force.

3. Device according to claim 1, wherein the coupling of the tool (2) at the end of the shaft (16) is designed in such a way that the tool (2) which is coupled to the end of the shaft (16) as intended is held at the end of the shaft (16) by means of magnetic force.

4. Device according to claim 3, wherein the tool (2) is made of a ferromagnetic material and the shaft (6) comprises at its end of the shaft (16) an in particular central magnet (17) by means of which the tool (2) is held at the end of the shaft (16).

5. Device according to claim 4, wherein the magnet (17) is arranged at least partially within the tool (2) when the tool (2) is coupled to the end of the shaft (16) as intended.

6. Device according to any one of the preceding claims wherein the tool is magnetic and/or comprises a magnet.

7. Device according to claim 6, wherein the tool is magnetic and/or comprises a magnet in the region of its coupling to the end of the shaft and is therewith held at the end of the shaft.

8. Device according to any one of the claims 6 to 7 wherein the magnet is at least partially located within the end of the shaft when the tool is coupled to the end of the shaft as intended.

9. Device according to any one of the claims 3 to 8 wherein the end of the shaft (16) is made of a non-ferromagnetic material.

10. Device according to any one of the claims 3 to 9 wherein the tool detection device (17, 23, 24) comprises a Hall sensor (23) with associated evaluation electronics, by means of which, at least in a certain axial position of the shaft (6), different characteristic magnetic field strengths can be distinguished between the tool (2) being coupled to the end of the shaft (16) as intended and the tool (2) not being coupled to the end of the shaft (16), respectively, for determining whether a tool (2) is arranged at the end of the shaft (16) as intended or not.

11. Device according to claim 10 wherein at least in one axial position of the shaft (6), in which the tool (2) coupled to the end of the shaft (16) as intended has a maximum distance to the to be shredded frozen food products block, different characteristic magnetic field strengths can be distinguished between the tool (2) being coupled to the end of the shaft (16) and the tool (2) not being coupled to the end of the shaft (16), for determining whether a tool (2) is arranged at the end of the shaft (16) as intended or not.

12. Device according to any one of the claims 10 to 11, wherein the Hall sensor (17) is arranged on a stationary component (22) of the device.

13. Device according to claim 12, wherein the Hall sensor is arranged in a region close to the shaft, in particular in a region which, with the shaft being fully retracted, is near the end of the shaft which holds the tool as intended.

14. Device according to claim 12, wherein the Hall sensor (17) is arranged in a region remote from the shaft (6), and wherein a ferrite rod (24) is arranged between the Hall sensor (17) and the shaft (6), in particular between the Hall sensor (17) and a region which, when the shaft (6) is fully retracted, is close to the end (16) of the shaft (6) which holds the tool (2) as intended.

15. Device according to claim 14, wherein substantially no ferromagnetic components are arranged between the ferrite rod (24) and the end (16) of the shaft (6) holding the tool (2).

16. Device according to any one of the preceding claims where the device comprises a control unit which only permits a device operation as intended if the tool detection device (17, 23, 24) determines or has determined, respectively, that a tool (2) is arranged at the end of the shaft (16) as intended.

## Revendications

1. Dispositif pour déchiqueter, en particulier réduire en purée ou en pacotille, des produits alimentaires surgelés fournis sous forme de bloc,
avec un outil (2) pour déchiqueter au moins une partie du bloc de produits alimentaires surgelés, lequel outil est couplé à une extrémité (16) d'un arbre rotatif (6), au moyen duquel il est, pendant le fonctionnement prévu, mis en rotation autour d'un axe de rotation (X) particulièrement vertical et au moyen duquel il est ainsi avancé le long de l'axe de rotation (X) dans une direction (S) vers le bloc de produits alimentaires, raclant ainsi des couches d'aliments du bloc de produits alimentaires,
dans lequel l'accouplement de l'outil (2) sur l'extrémité de l'arbre (16) est conçu de telle manière,
que l'outil (2) peut être retiré de l'extrémité de l'arbre (16) sans outils et peut être ré-accouplé à l'extrémité de l'arbre (16) comme prévu,
que l'outil (2) accouplé comme prévu à l'extrémité de l'arbre (16) s'appuie axialement contre l'extrémité de l'arbre (16) et est ainsi maintenu par force sur l'extrémité de l'arbre (16),
que l'outil (2) qui est couplé à l'extrémité de l'arbre (16) comme prévu forme un verrouillage positif rotatif dans sa direction de rotation d'entraînement prévue avec l'extrémité de l'arbre (16) pour transmettre des forces d'entraînement de l'arbre (6) à l'outil (2),
et dans lequel le dispositif comprend un dispositif de détection d'outil (17, 23, 24) au moyen duquel il peut être déterminé si un outil (2) est disposé à l'extrémité de l'arbre (16) comme prévu ou non.

2. Dispositif selon la revendication 1, dans lequel l'accouplement de l'outil à l'extrémité de l'arbre est conçu de telle sorte que l'outil qui est accouplé à l'extrémité de l'arbre comme prévu, est maintenu à l'extrémité de l'arbre par engagement par friction ou au moyen d'une connexion par encliquetage qui peut être libérée en surmontant une certaine force.

3. Dispositif selon la revendication 1, dans lequel l'accouplement de l'outil (2) à l'extrémité de l'arbre (16) est conçu de telle sorte que l'outil (2) qui est accouplé à l'extrémité de l'arbre (16) comme prévu est maintenu à l'extrémité de l'arbre (16) au moyen d'une force magnétique.

4. Dispositif selon la revendication 3, dans lequel l'outil (2) est constitué d'un matériau ferromagnétique et l'arbre (6) comprend à son extrémité de l'arbre (16) un aimant (17) notamment central au moyen duquel l'outil (2) est maintenu à l'extrémité de l'arbre (16) .

5. Dispositif selon la revendication 4, dans lequel l'aimant (17) est disposé au moins partiellement à l'intérieur de l'outil (2) lorsque l'outil (2) est couplé à l'extrémité de l'arbre (16) comme prévu.

6. Dispositif selon l'une des revendications précédentes, dans lequel l'outil est magnétique et/ou comprend un aimant.

7. Dispositif selon la revendication 6, dans lequel l'outil est magnétique et/ou comprend un aimant dans la zone de son accouplement à l'extrémité de l'arbre et est ainsi maintenu à l'extrémité de l'arbre.

8. Dispositif selon l'une des revendications 6 à 7, dans lequel l'aimant est au moins partiellement situé à l'intérieur de l'extrémité de l'arbre lorsque l'outil est couplé à l'extrémité de l'arbre comme prévu.

9. Dispositif selon l'une des revendications 3 à 8, dans lequel l'extrémité de l'arbre (16) est constituée d'un matériau non ferromagnétique.

10. Dispositif selon l'une des revendications 3 à 9, dans lequel le dispositif de détection d'outil (17, 23, 24) comprend un capteur à effet Hall (23) avec une électronique d'évaluation associée, au moyen de laquelle, au moins dans une certaine position axiale de l'arbre (6), différentes intensités de champ magnétique caractéristiques peuvent être distinguées entre l'outil (2) couplé à l'extrémité de l'arbre (16) comme prévu et l'outil (2) non couplé à l'extrémité de l'arbre (16), respectivement, pour déterminer si un outil (2) est disposé sur l'extrémité de l'arbre (16) comme prévu ou non.

11. Dispositif selon la revendication 10, dans lequel au moins dans une position axiale de l'arbre (6), dans laquelle l'outil (2) couplé à l'extrémité de l'arbre (16) comme prévu a une distance maximale par rapport au bloc de produits alimentaires surgelés à déchiqueter, différentes intensités de champ magnétique caractéristiques peuvent être distinguées entre l'outil (2) étant couplé à l'extrémité de l'arbre (16) et l'outil (2) n'étant pas couplé à l'extrémité de l'arbre (16), pour déterminer si un outil (2) est disposé à l'extrémité de l'arbre (16) comme prévu ou non.

12. Dispositif selon l'une des revendications 10 à 11, dans lequel le capteur à effet Hall (17) est disposé sur un composant fixe (22) du dispositif.

13. Dispositif selon la revendication 12, dans lequel le capteur à effet Hall est disposé dans une région proche de l'arbre, en particulier dans une région qui, l'arbre étant totalement rétracté, est proche de l'extrémité de l'arbre qui maintient l'outil comme prévu.

14. Dispositif selon la revendication 12, dans lequel le capteur à effet Hall (17) est disposé dans une région éloignée de l'arbre (6), et dans lequel une tige de ferrite (24) est disposée entre le capteur à effet Hall (17) et l'arbre (6), en particulier entre le capteur à effet Hall (17) et une région qui, lorsque l'arbre (6) est complètement rétracté, est proche de l'extrémité (16) de l'arbre (6) qui maintient l'outil (2) comme prévu.

15. Dispositif selon la revendication 14, dans lequel sensiblement aucun composant ferromagnétique n'est disposé entre la tige de ferrite (24) et l'extrémité (16) de l'arbre (6) maintenant l'outil (2).

16. Dispositif selon l'une des revendications précédentes, dans lequel le dispositif comprend une unité de commande qui ne permet un fonctionnement du dispositif comme prévu que si le dispositif de détection d'outil (17, 23, 24) détermine ou a déterminé, respectivement, qu'un outil (2) est agencé à l'extrémité de l'arbre (16) comme prévu.
